# EUROPEAN PATENT APPLICATION

(11) **EP 3 026 958 A1**
(43) Date of publication of application: **01.06.2016**
(21) Application number: 14841115.0
(22) Date of filing: 07.05.2014
(51) Int. Cl.: H04W 28/08

(54) **METHOD FOR COORDINATED MULTI-STREAM TRANSMISSION OF DATA, AND ENB**

(30) Priority: 29.08.2013 CN 201310386259
(71) Applicant: ZTE Corporation, Shenzhen, Guangdong 518057 (CN)
(72) Inventor: WANG, Xin, Shenzhen Guangdong 518057 (CN); HE, Feng, Shenzhen Guangdong 518057 (CN); LI, Dapeng, Shenzhen Guangdong 518057 (CN)
(74) Representative: Modiano, Gabriella Diana
(86) International application number: PCT/CN2014/076967
(87) International publication number: WO 2015/027719

(57) **Abstract**

The present invention discloses a method and an eNB for coordinated multi-stream transmission of data, which relate to mobile communication systems. The method includes the following steps: in a process of undertaking an offloaded bearer data transmission service of a user equipment (UE) for a master eNB, a secondary eNB selected as an offloading node transmitting offloaded bearer status information to the master eNB; and the master eNB adjusting an offloading strategy for the secondary eNB according to the offloaded bearer status information of the secondary eNB. The present invention further discloses an eNB. The present invention provides a scheme of high rate joining data transmission services for the UE and is applicable to various user plane architectures and Xn interfaces and able to provide excellent joining data transmission services for the UE at high speed and reliably.

## Description

### Technical Field

The present invention relates to mobile communication systems, and more particularly, to a method and an eNB for coordinated multi-stream transmission of data in the mobile communication systems deployed in a heterogeneous network.

### Background of the Related Art

With the continuous evolution of wireless communication technologies and protocol standards, mobile packet services experience enormous development and data throughput ability of a single terminal is increased constantly. For example, in long term evolution (LTE) systems, data transmission at a maximum rate of 100Mbps in downlink can be supported within 20M bandwidth; in subsequent LTE Advanced (LTE-A) systems, a data transmission rate will be further increased and even reach 1 Gbps.

The expanded increase of amount of data services of terminals causes both service capabilities and deployment strategies of mobile networks to face huge pressure and challenge. On one hand, operators need to enhance related network deployment and communication skills, and on the other hand, they desire to accelerate promotion of new techniques and network expansion, thereby achieving the purpose of improving network performance. However, in the mobile communication systems developed up to now, providing economic, flexible and high capacity services by enhancing macro networks becomes more and more difficult. Therefore, the network strategy in which low power nodes (LPN) are deployed to provide coverage for small cells becomes a very attractive solution, which is particularly embodied in indoor/outdoor hot spot areas where data transmission volume is huge.

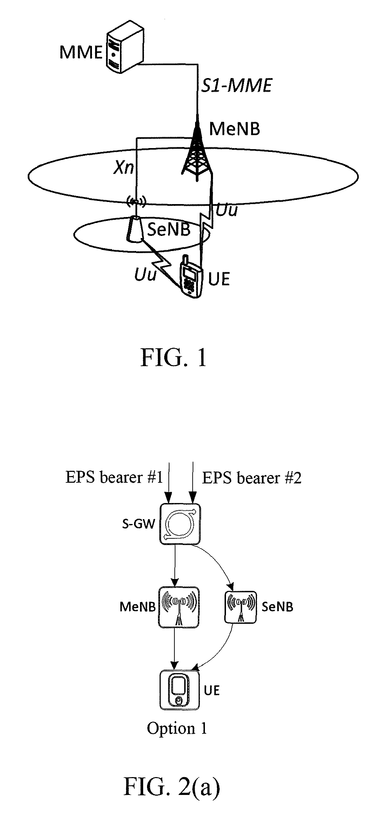

The enhancement in LPN deployment and capacity is acknowledged by the third generation partnership projects (3GPP) as one of most interesting topics in the future network development. In the process in which various eNBs provide services independently for user equipments (UE), there are many problems and the demand for huge amount of data and high mobility cannot be satisfied. Therefore, the scenario in which low power nodes are deployed in the coverage scope or on boundaries of macro eNBs and both of the low power nodes and macro eNBs compose an access network in a system architecture to provide data transmission services collectively for the UE is more acknowledged in the industry and an architecture mode generally recognized is implemented, as shown in FIG. 1. An eNB, between which and a mobility management entity (MME) in a core network (CN) an S1-MME interface is established and which is regarded as a mobile anchor point by the CN, is referred to as master eNB (MeNB). In addition to the MeNB, an eNB providing additional radio resources for the UE is referred to as a secondary eNB (SeNB). An interface between the MeNB and the SeNB is referred to as an Xn interface temporally. Radio Uu interfaces are respectively established between the MeNB and the UE, the SeNB and the UE, and user plane data and necessary control plane signaling may be transmitted between the MeNB and UE, the SeNB and the UE, i.e., the UE is in a dual connectivity (DC) architecture mode.

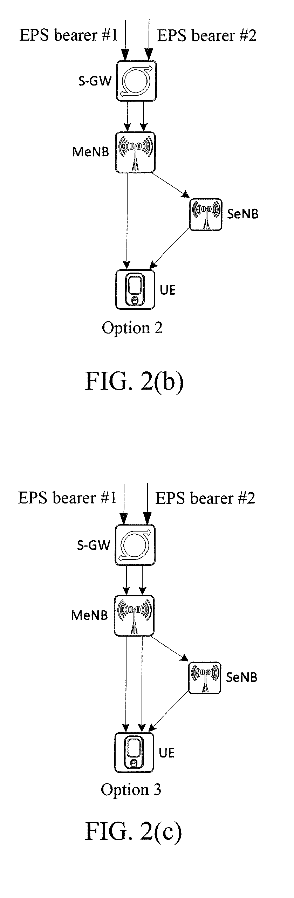

For the UE in the DC state, the most important function of the SeNB is to undertake mass data transmitted originally by the MeNB only, thereby reducing the burden of the MeNB, increasing data transmission rate for the UE and improving the performance of the system. There may be three options for the user plane architecture in the DC mode, as shown in FIG. 2. As shown in FIG. 2, in option 1, an S1-U interface is established between both the SeNB and the MeNB and a serving gateway (S-GW) in the CN, i.e., the SeNB, together with the S-GW, directly transmits data of a bearer (such as EPS bearer #2) offloaded by the MeNB and interacts with the UE at the Uu interface. In option 2, the offloaded bearer data undertaken by the SeNB is received/transmitted by an Xn interface established between the SeNB and the MeNB and the SeNB is invisible to the CN. Option 3 is similar to option 2, the difference is that the bearer undertaken by the SeNB will not be a complete bearer any more but only a portion of data of the bearer (EPS bearer #2), i.e., this is a bearer split architecture mode.

No matter what kind of user plane architecture modes are chosen, changes to the related protocol stack architecture due to the offloading mode as well as transmission, mobility and security for the SeNB are different from those for the traditional MeNB. Therefore, in a multi-stream transmission scenario where the SeNB is deployed, how to utilize its characteristics to keep a good cooperation mechanism between the SeNB and the MeNB to provide optimized communication services for the user equipment so as to satisfy the demand for higher bandwidth, better performance, lower cost, more safe and applicability of various backward links is a an important topic required to be solved urgently in the development of LTE communication systems.

When there is the demand for offloading data for the MeNB (e.g., the burden of a node itself is too heavy), the MeNB can select a suitable SeNB as a offloading node for user plane data of the UE according to information such as a measurement result of radio signal quality reported by the UE, load statuses of adjacent nodes, etc.

Based on the understanding and reasonable broadening of the related technologies, after the suitable SeNB is chosen, the MeNB will inform the SeNB of a resource status of the pre-offloaded bearer to the SeNB to request the SeNB to decide whether it has enough ability and resources to accept the transmission of the offloaded bearer. If the SeNB agrees on the offloading request, then in the process of transmitting the offloaded data, the SeNB may report its hardware load and air interface resources to the MeNB so that the MeNB can make a corresponding judgement about load balance.

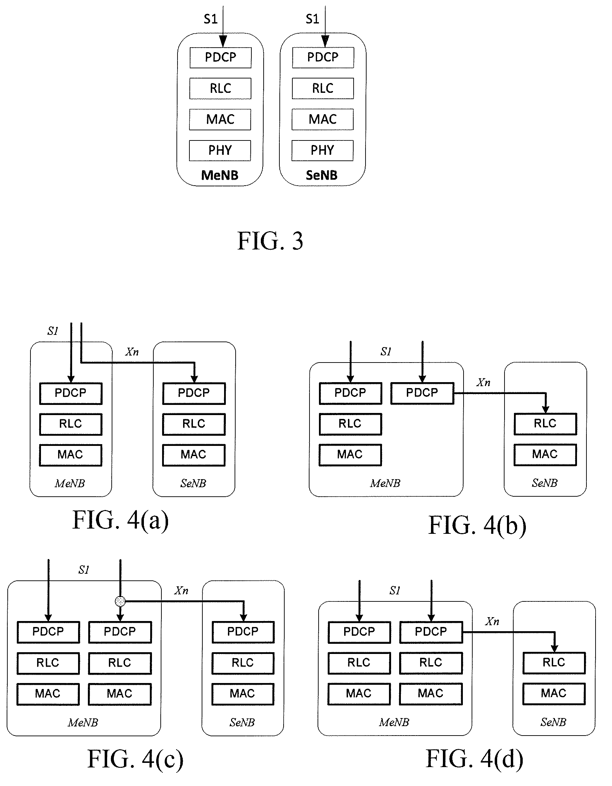

However, even the system architecture shown in FIG. 1 in the related art is used, there are some problems in the cooperation between the MeNB and the SeNB. Taking downlink data transmission in the related art as an example, if air interface resources of an eNB are sufficient, then it is believed that data from the core network (the S1-U interface) will be transmitted reliably to the UE without congestion. However, in a system architecture in which the MeNB and the SeNB establish dual connectivity with the UE and provide collectively multi-stream data transmission services for the UE, it is possible that the downlink data received by the SeNB exceeds the processing capacity of the node itself, thereby resulting in the data being accumulated in a buffer, causing some problems such as overload in the buffer, increased transmission failure rate of data packets or too long time for which data packets are transmitted successfully. From the perspective of a protocol stack of the user plane architecture:
Option 1: that is, performing offloading at CN side. There is only one situation from the perspective of the protocol stack, which is called as Alternative 1A (Alt 1A, the following is the same), as shown in FIG. 3. Although under such architecture, the downlink data of the user plane of the SeNB comes from the core network (S-GW), like in the related art, bearer management (i.e., offloading decision and regulation and control) of its control plane is at the MeNB and not at the MME any more. If the too heavy burden of the SeNB further results in the decrease of transmission quality, the SeNB should inform the MeNB of it such that the MeNB can perform timely processing such as load balance/offloading regulation and control.
Option 2 and 3: that is, performing offloading at the access network side. From the perspective of the protocol stack, it is divided into:
   Inter layer offloading: As shown in FIG. 4, (a) and (b) are data packet offloading which are subdivided under option 2 and take upper (Alt 2A) and lower (Alt 2C) packet data convergence protocol (PDCP) layers as offloading points respectively; and (c) and (d) are data packet offloading which are subdivided under option 3 and take upper (Alt 3A) and lower (Alt 3C) PDCP layers as offloading points respectively. That is to say, the data packets originally processed in the protocol stack inside one node are offloaded to be processed on two nodes across the external interface (Xn) under the system architecture shown in FIG. 1. Taking the downlink data as an example below, a higher protocol layer (such as PDCP) in the MeNB may send data packets exceeding the processing capacity of a lower protocol layer (such as radio link control (RLC) layer) in the SeNB of the distribution node, resulting in memory overflow of the lower protocol layer.

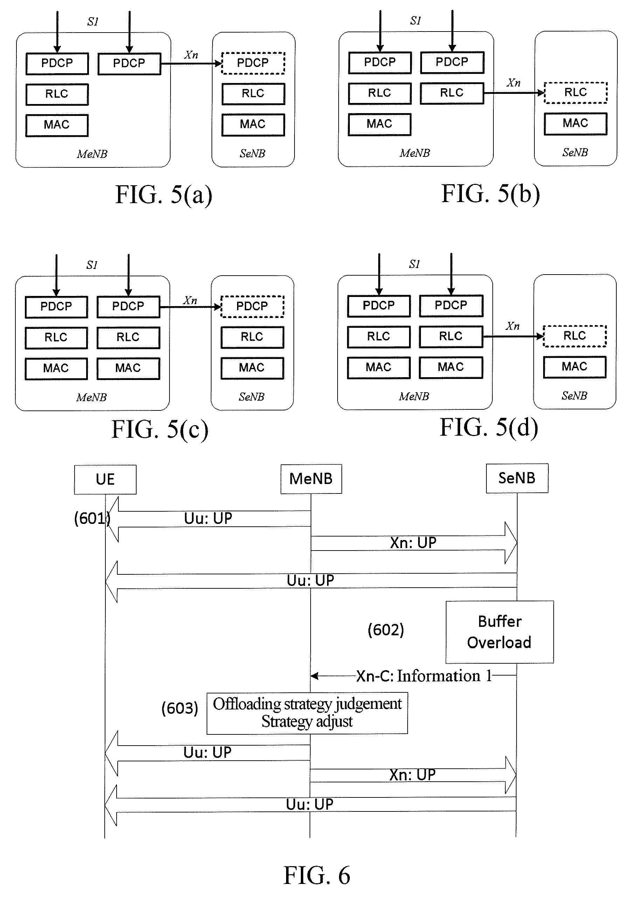

Intra layer offloading: As shown in FIG. 5, (a) and (b) are data packet offloading which are subdivided under option 2 and take an intra PDCP layer (Alt 2B) and an intra RLC layer (Alt 2D) as offloading points respectively; and (c) and (d) are data packet offloading which are subdivided under option 3 and take an intra PDCP layer (Alt 3B) and an intra RLC layer (Alt 3D) as offloading points respectively. That is to say, the data packets originally processed in the protocol stack inside one node are offloaded to be processed on two nodes across the external interface (Xn) under the system architecture shown in FIG. 1. Taking the downlink data as an example below, a master protocol layer (such as master-PDCP) in the MeNB may send data packets exceeding the processing capacity of a slave protocol layer (such as slave-layer) in the SeNB of the offloading node, resulting in the slave protocol layer being unable to work normally.

Therefore, no matter what kind of user plane architectures are used, there is one problem in the system architecture shown in FIG.1, i.e., the MeNB cannot learn transmission quality statuses of the data packets of the offloaded bearer undertaken by the SeNB in time so that the suitable adjustment to an offloading strategy cannot be made timely, which may result in the failure of the offloading link eventually.

### Summary of the Invention

The technical problem to be solved by embodiments of the present invention is to provide a method and an eNode B (eNB) for coordinated multi-stream transmission of data so as to solve the problem that a master eNB (MeNB) and a secondary eNB (SeNB) provide high rate joining data transmission services for a user equipment (UE) in a heterogeneous network.

In order to solve the problem described above, an embodiment of the present invention discloses a method for coordinated multi-stream transmission of data comprising:
in a process of undertaking a offloaded bearer data transmission service of a user equipment (UE) for a master eNode B (eNB), a secondary eNB selected as an offloading node transmitting offloaded bearer status information of the secondary eNB to the master eNB; and
the master eNB adjusting an offloading strategy for the secondary eNB according to the offloaded bearer status information of the secondary eNB.

Optionally, in the method described above, the offloaded bearer status information at least includes one or more of the following:
user plane protocol stack buffer information, data packet transmission failure rate information of the offloaded bearer and data packet transmission delay information of the offloaded bearer.

Optionally, in the method described above, the secondary eNB transmitting offloaded bearer status information of the secondary eNB to the master eNB comprises:
the secondary eNB transmitting the offloaded bearer status information of the secondary eNB to the master eNB through a control plane signaling or a control information element of a user plane.

Optionally, in the method described above, the secondary eNB transmitting offloaded bearer status information of the secondary eNB to the master eNB comprises:
the secondary eNB transmitting the offload bearer status information of the secondary eNB to the master eNB according to a period configured by the master eNB; or
the secondary eNB transmitting offloaded bearer status information of the secondary eNB to the master eNB after receiving a request message sent by the master eNB; or
the secondary eNB transmitting offloaded bearer status information of the secondary eNB to the master eNB when the offloaded bearer status information of the secondary eNB satisfies any of triggering conditions configured by the master eNB, wherein the triggering conditions at least include:
   a user plane protocol stack buffer of the secondary eNB is overloaded;
   a data packet transmission failure rate of the offloaded bearer of the secondary eNB is too high; and
   data packet transmission delay of the offloaded bearer of the secondary eNB is too long.

Optionally, in the method described above, the master eNB adjusting the offloading strategy for the secondary eNB according to the offloaded bearer status information of the secondary eNB comprises one or more of the following operations:
adjusting an offloaded data volume/rate for the secondary eNB;
modifying protocol layer configuration of the offloaded bearer for the secondary eNB; and canceling offloading transmission for the secondary eNB.

An embodiment of the present invention further discloses an eNode B (eNB) comprising:
a first unit configured to detect offloaded bearer status information of the eNB in a process in which the eNB as a secondary eNB undertakes an offloaded bearer data transmission service of a user equipment (UE) for a master eNB; and
a second unit configured to transmit offloaded bearer status information of the eNB to the master eNB.

Optionally, in the eNB described above, the offloaded bearer status information at least includes one or more of the following:
user plane protocol stack buffer information, data packet transmission failure rate information of the offloaded bearer and data packet transmission delay information of the offloaded bearer.

Optionally, in the eNB described above, the second unit is configured to transmit the offloaded bearer status information of the eNB to the master eNB through a control plane signaling or a control information element of a user plane.

Optionally, in the eNB described above, the second unit is further configured to transmit the offloaded bearer status information of the eNB to the master eNB according to a period configured by the master eNB; or transmit the offloaded bearer status information of the eNB to the master eNB after the eNB receives a request message sent by the master eNB; or transmit the offloaded bearer status information of the eNB to the master eNB when the offloaded bearer status information of the eNB satisfies any of triggering conditions configured by the master eNB, wherein the triggering conditions at least include:
a user plane protocol stack buffer of the eNB is overloaded;
a data packet transmission failure rate of the offloaded bearer of the eNB is too high; and
data packet transmission delay of the offloaded bearer of the eNB is too long.

Optionally, the eNB described above further comprises a third unit configured to, when the eNB is the master eNB, receive an offloaded bearer status information sent by other secondary eNB and adjust the offloading strategy for the secondary eNB according to the received offloaded bearer status information of the secondary eNB.

Optionally, in the eNB described above, the third unit is configured to adjust the offloading strategy for the secondary eNB according to the offloaded bearer status information of the secondary eNB, comprising one or more of the following operations:
adjusting an offloaded data volume/rate for the secondary eNB;
modifying protocol layer configuration of the offloaded bearer for the secondary eNB; and
canceling offloading transmission for the secondary eNB.

The technical scheme of the embodiments of the present invention is intended to provide a scheme in which an MeNB and an SeNB can coordinates timely and primely to provide high rate joining data transmission services for a UE in a heterogeneous network. The technical scheme of the application is applicable to various user plane architectures and Xn interfaces and able to provide excellent joining data transmission services for the UE at high speed and reliably.

### Brief Description of Drawings

FIG. 1 is a schematic diagram of a system architecture in which low power nodes deployed within the coverage or on boundaries of the related macro eNBs provide joining data transmission services for the UE;
FIG. 2 is a schematic diagram of three types of user plane system architectures of the system architecture shown in FIG.1 in the DC mode;
FIG. 3 is a schematic diagram of a user plane architecture Alt 1A;
FIG. 4 is a schematic diagram of user plane architectures Alt 2A/2C/3A/3C;
FIG. 5 is a schematic diagram of user plane architectures Alt 2B/2D/3B/3D;
FIG. 6 is a flow chart of a method in accordance with the first embodiment of the present invention;
FIG. 7 is a flow chart of a method in accordance with the second embodiment of the present invention; and
FIG. 8 is a flow chart of a method in accordance with the third embodiment of the present invention.

### Preferred Embodiments of the Present Invention

The technical scheme of embodiments of the present invention will be described in detail in conjunction with the accompanying drawings. The embodiments of the present invention and various features in the embodiments can be combined with each other arbitrarily without conflict.

### The first embodiment

The embodiment provides a method for coordinated multi-stream transmission of data, wherein in the data packet transmission process of an offloaded bearer, an MeNB receives offloaded bearer status information reported by an SeNB and adjusts a corresponding offloading strategy. The method comprises the following steps.

In the process of undertaking a offloaded bearer data transmission service of a user equipment (UE) for a master eNB, a secondary eNB selected as a distribution node transmits offloaded bearer status information of the secondary eNB to the master eNB; and
the master eNB adjusts an offloading strategy for the secondary eNB according to the offloaded bearer status information of the secondary eNB.

The MeNB may be a macro eNB or a low power node (such as pico eNB), establishes an S1-MME interface with an MME of a core network and provides stable and reliable radio signal coverage for a UE. The SeNB may be a low power node, establishes an Xn interface with the MeNB and provides data transmission of a user plane for the UE.

The offloaded bearer status information reported by the SeNB may be one or more of data packet transmission failure rate information of the offloaded bearer, data packet transmission delay information of the offloaded bearer and user plane protocol stack buffer information. The unit for each of the information may be per data radio bearer (DRB) or per UE.

The value of the information may be a level indication of "low/medium/high/overload" or failure times/delay time/buffer occupancy percentage value or information indicating whether a pre-configured threshold is reached, etc.

In the implement process, the SeNB may send the reported message through a new control plane signaling via the Xn interface or add the reported message in control plane signaling of the related art or carry the reported message in a control information element of a user plane, that is, the offloaded bearer status information of the secondary eNB may be sent to the master eNB through the control plane signaling or the control information element of the user plane.

Moreover, the time at which the information is sent may be in the data packet transmission process of the offloaded bearer, and a request for the MeNB is sent actively or replied passively by the SeNB according to the pre-configuration. That is, the secondary eNB may transmit the offloaded bearer status information to the master eNB according to a period pre-configured by the master eNB, or transmit its bearer status information to the master eNB after receiving a request message sent by the master eNB, or transmit its offloaded bearer status information to the master eNB when the offloaded bearer status information of the secondary eNB satisfies any of triggering conditions pre-configured by the master eNB, wherein the triggering conditions at least include:
a user plane protocol stack buffer of the secondary eNB is overloaded (i.e., the load of the user plane protocol stack buffer reaches or exceeds the configured threshold);
a data packet transmission failure rate of the offloaded bearer of the secondary eNB is too high (i.e., the data packet transmission failure rate reaches or exceeds the configured transmission failure rate threshold); and
data packet transmission delay of the offloaded bearer of the secondary eNB is too long (i.e., the data packet transmission delay reaches or exceeds the configured transmission delay threshold).

Each of the configured thresholds may be based on the pre-configuration or configuration of the MeNB.

If the MeNB configures the SeNB to make report periodically, then when the period time expires, the SeNB may report the offloaded bearer status information as a level indication of the data packet transmission failure times per DRB or per UE/delay/buffer status or data or an indication of whether the threshold pre-configured by the MeNB is reached. If the MeNB configures the SeNB to report a triggering event (i.e., make report when an triggering condition is satisfied), then the SeNB should send the reported message when the offloaded data packet transmission failure times per DRB or per UE/delay/buffer status reaches the lever threshold configured by the MeNB or the data.

The MeNB adjusting the offloading strategy may comprise one or more of following operations:
adjusting offloaded data volume/rate for the SeNB;
modifying protocol layer configuration of the offloaded bearer at the SeNB side; and
canceling offloading transmission for the SeNB.

Corresponding to the information reported by the SeNB, the offloading strategy determined by the MeNB may be per DRB or per UE as well.

Using the method described above, the MeNB may obtain the offloaded bearer status information at the SeNB side timely to adjust the offloading strategy for the SeNB such that an access network can provide multi-stream data transmission services for the UE cooperatively, reliably and efficiently.

The present invention will be further described in conjunction with different embodiments.

The first embodiment: the MeNB and the SeNB provide collectively the multi-stream data transmission services for the UE. When the buffer of the SeNB itself is overloaded (i.e., a triggering condition is satisfied), the SeNB reports this case to the MeNB, and the MeNB may relieve offloaded data volume for the SeNB after receiving the information. (It should be noted that in this embodiment the air interface control plane portion is not involved in, which is independent of the solution of the application, the following is the same.) The process of coordinated multi-stream transmission of data is shown in FIG. 6 and comprises step 601 to step 603.

In step 601, the MeNB selects a suitable low power node as an offloading node (SeNB) of the UE according to one or more of radio environment of a certain UE, service status and load situation of each small cell within the coverage area of the MeNB, and requests the SeNB to decide to accept access of the UE according to resources required by the pre-offloaded bearer. The UE accesses the SeNB under the direction of the MeNB and establishes a user plane link with the SeNB. Taking downlink data as an example, the UE may receive subscriber data on two Uu interfaces respectively.

In step 602, when undertaking the offloaded bearer data transmission services of the UE for the MeNB, the SeNB will serve other UE which access its small cell. If it accepts too much UE (air interface load may be too heavy) or the signal quality of the offloaded UE decreases (transmission of data packets may fail, thereby resulting in retransmission), then mass data packets of the offloaded bearer will accumulates in the buffer of the SeNB itself and will not be transmitted timely to the UE, resulting in the decrease of transmission success rate of the data packets of the offloaded bearer, the increase of time for which the opposite end receives the data packets successfully and the increase of packet loss rate.

Accordingly, for each user plane architecture (taking downlink as an example):
Alt 1A: The rate of data packets transmitted from an S-GW to the SeNB via the S1-U interface is much faster than the rate of the offloaded bearer data packets sent by the SeNB to the UE, and the load of a buffer configured by the SeNB for the offloaded bearer is overloaded.
Alt 2A/2C/3A/3C: The rate of data packets (PDCP PDU or RLC PDU) transmitted from the MeNB to the SeNB via the Xn interface is too fast such that the load of a buffer of a lower layer protocol stack (RLC or MAC or lower) configured by the SeNB for the offloaded bearer is overloaded and the memory in the lower layer protocol stack is overflown.
Alt 2B/2D/3B/3D: The rate of data packets (PDCP PDU or RLC PDU) transmitted from the MeNB to the SeNB via the Xn interface is too fast such that the load of a buffer of a secondary layer protocol stack (S-PDCP or S-RLC) configured by the SeNB for the offloaded bearer is overloaded and the primary-secondary protocol stack is difficult to coordinate normal operation.

In such case, the SeNB may send a control plane signaling to the MeNB via the Xn interface to indicate to the MeNB that the buffer of the user plane protocol stack is overloaded. The control plane signaling may be a new message called as message 1, which contains a value Overload of IE - Buffer Status (enumerated values "LowLoad, MediumLoad, HighLoad, Overload, ...") or a value of occupancy percentage or an indication of whether the threshold pre-configured by the MeNB is reached.

A value sent by triggering the message in response to each of Load thresholds being reached may be pre-configured by the MeNB upon establishment of the offloaded bearer (the message may be a unidirectional message reported periodically or for triggering an event); or in the transmission process of the offloaded bearer data, the MeNB configures the SeNB to report the information periodically or for triggering an event (the message may be two/more messages of request-response type).

Wherein, the information may be aimed at one or more offloaded bearers of the UE or the offloaded bearer in which the Quality of Service (QoS) of all offloaded UE is equal.

In step 603, after the MeNB receives the control plane signaling, if the information indicates that the load of the buffer of the SeNB is very heavy, then the MeNB may adjust the offloading strategy for the SeNB, for example, slow down transmission of data packets for the SeNB. For the user plane architecture:
Option 1: The MeNB may report this information to a core network, for example, by indicating it to an MME through the S1-MME interface, then the MME informs the S-GW to decrease the transmission rate of the offloaded bearer data packets.
Option 2: The MeNB may decrease the forwarding rate of the offloaded bearer data packets to the SeNB. If there is still space in the buffer of the MeNB itself, the MeNB may store mass data without overflow.
Option 3: The MeNB may decrease the number of the forwarded offloaded bearer data packets and send more data packets of the bearer to the UE via the Uu interface between the MeNB and the UE.

For the unit of the information in step 602, the adjustment of the offloading strategy may be aimed at one or more offloaded bearers of the UE or the indicated offloaded bearer in which the QoS of all offloaded UE is equal.

Thus, the SeNB can obtain space in time to process and send the offloaded data packets without the decrease of transmission success rate of the data packets of the offloaded bearer, the increase of time for which the opposite end receives the data packets successfully and the increase of packet loss rate due to congestion in the buffer.

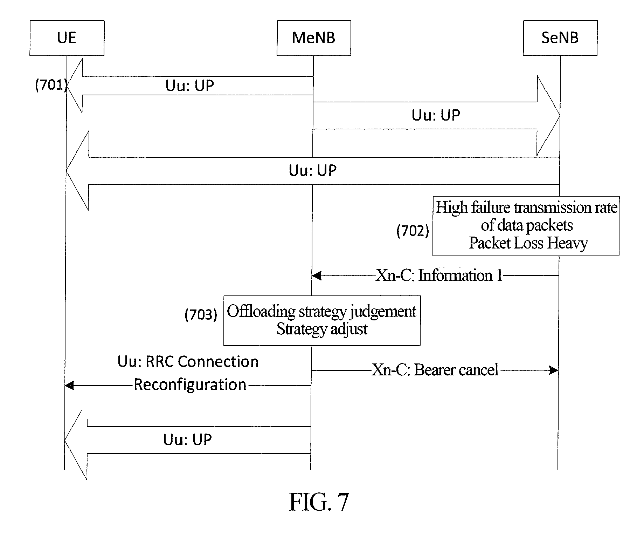

The second embodiment: The MeNB and the SeNB collectively provide the multi-stream data transmission services for the UE. When the SeNB's processing/transmission ability for the offloaded bearer is decreased and which causes the transmission failure rate of the date packets to rise (i.e., a triggering condition is satisfied), the SeNB may report this case to the MeNB, and the MeNB may delete offloading transmission undertaken by the SeNB after receiving the information. The steps are shown in FIG. 7.

In step 701, as described before, the MeNB selects a suitable low power node as an offloading node (SeNB) of a certain UE, and the UE accesses the SeNB under the direction of the MeNB and establishes a user plane link with the SeNB. Taking downlink data as an example, the UE may receive user data on two Uu interfaces respectively.

In step 702, when undertaking the offloaded bearer data transmission services of the UE for the MeNB, the SeNB will serve other UE which access its small cell. If it accepts too much UE (or the service volume of the serving UE is increased greatly) or the signal quality of the offloading UE decreases, then the SeNB's processing/transmission ability for the offloaded bearer may be decreased, thereby causing the transmission failure rate of the date packets to rise.

Accordingly, for each user plane architecture:
Alt 1A: The offloaded bearer is transmitted between the S-GW, SeNB and UE (i.e., without passing through the MeNB), and the MeNB cannot learn timely that the data packet transmission failure rate of the offloaded bearer is high.
Alt 2A/2B/3A/3B: the PDCP layer of the offloaded bearer is mainly at the MeNB, and according to feedback information configuration (for each data packet, inter layer indication) which may be received by the associated PDCP, the MeNB will not efficiently and timely learn that the data packet transmission failure rate of the lower protocol stack is high.
Alt 2C/2D/3C/3D: The offloading takes place in or below the RLC layer, and according to the associated RLC retransmission mechanism settings, the MeNB may not timely learn that the data packet transmission failure rate of the lower protocol stack and the offloaded bearer at the SeNB side is high.

In such case, the SeNB may send a control plane signaling to the MeNB via the Xn interface to the MeNB to indicate the MeNB that the data packet transmission failure rate of the offloaded bearer is high. The control plane signaling may be a new message called as message 1, which contains a value High of IE - Packet Transmission Fail (enumerated values "Low, Medium, High, ...") or a value of actual failure times (the MeNB determines whether the reported times is acceptable). The remaining reported details are the same as described in the first embodiment and will not be repeated any more.

In step 703, after the MeNB receives the control plane signaling, if the information indicates that the transmission failure rate is high, then the MeNB may adjust the offloading strategy for the SeNB. If resource status of the MeNB at this time is allowed, then the offloading transmission undertaken by the SeNB may be deleted (continuing with the unit at which the reported information is aimed in step 702, here the MeNB determines the adjustment to the offloading strategy is also aimed at the DRB/UE, like the first embodiment), and for all services of the offloaded bearer/the UE are undertaken by the MeNB itself, this requires the MENB to inform the SeNB to cancel the transmission of the offloaded bearer and further requires using the air interface control plane signaling to indicate the UE to forward the offloaded bearer to the MeNB for continuous interaction. For the user plane architecture:
Option 1: The MeNB may make an indication to the MME of the core network, and then the MME informs the S-GW to forward downlink tunnel end points of the offloaded bearer to the MeNB.
Option 2: The MeNB cancels the transmission of the offloaded bearer at the SeNB and sends user data to the UE according to the related art after receiving the user data from the core network.
Option 3: The MeNB cancels the transmission of part of the data of the offloaded bearer at the SeNB and all data packets of the offloaded bearer are sent to the UE by the MeNB (i.e., is restored to a single connectivity architecture).

Thus, if resource status of the MeNB is allowed, efficient and reliable communication services may be provided to the UE according to the related art. In addition, if the resource status of the MeNB is still lack, other suitable low power nodes may be selected for the UE to continue to undertake offloading transmission.

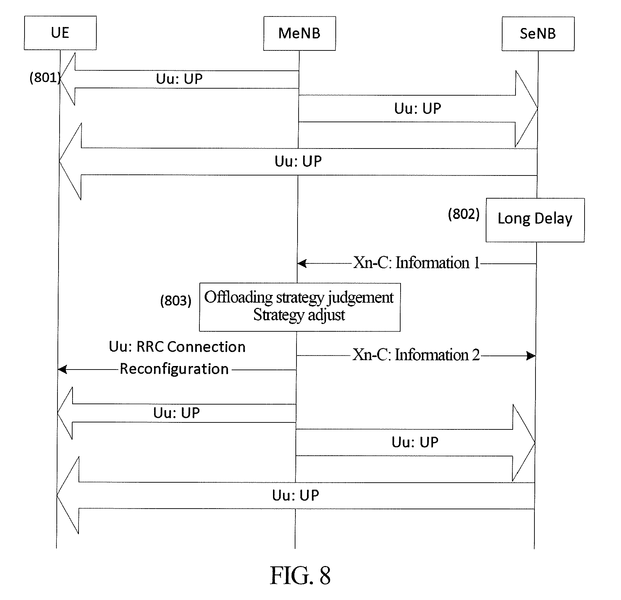

The third embodiment: The MeNB and the SeNB collectively provide the multi-stream data transmission services for the UE. When the SeNB's processing/transmission ability for the offloaded bearer is decreased and which results in too long time for which the opposite end receives data packets successfully (i.e., a triggering condition is satisfied), the SeNB may report this case to the MeNB, and the MeNB may modify protocol stack configuration of the offloaded bearer after receiving the information. The steps are shown in FIG. 8.

In step 801, as described before, the MeNB selects a suitable low power node as an offloading node (SeNB) of a certain UE, and the UE accesses the SeNB under the direction of the MeNB and establishes a user plane link with the SeNB. Taking downlink data as an example, the UE may receive user data on two Uu interfaces respectively.

In step 802, when undertaking the offloaded bearer data transmission services of the UE for the MeNB, the SeNB will serve other UE which access its small cell. If it accepts too much UE (or the service volume of the serving UE is increased greatly) or the signal quality of the offloading UE decreases, then the SeNB's processing/transmission ability for the offloaded bearer may be decreased, which causes a receiving end to receive one date packet successfully only after a long time, thereby resulting in the decrease of performance of the offloaded bearer.

Accordingly, for each user plane architecture:
Alt 1A: The offloaded bearer is transmitted without passing through the MeNB, and the MeNB cannot learn timely that the time for which the offloaded bearer data packets are transmitted successfully is too long.
Alt 2A/3A: the offloading takes place above the PDCP layer of the MeNB. Taking downlink data as an example, the MeNB will forward IP data packets received from the core network (S-GW) to the SeNB, then the IP data packets is sent to the UE after being processed at each protocol sublayer of L2 by SeNB. Therefore, similar to Alt 1A, the MeNB cannot learn timely that the time for which data packets at the SeNB side are transmitted successfully is too long.
Alt 2B/2C/2D/3B/3C/3D: The offloading takes place in or below the PDCP layer of the MeNB, and according to the protocol layer configuration of the associated AM mode, the PDCP of a transmitting end may configures a discarding timer for PDCP PDU, and the RLC transmitting end may receive feedback information indicating whether the data packets are successfully received by the opposite end. For the data packets of the offloaded bearer sent at the SeNB side under the architecture of the present invention, the MeNB cannot learn timely that the time for which the data packets at the SeNB side are transmitted successfully is too long.

In such case, the SeNB may send a control plane signaling to the MeNB via the Xn interface to indicate to the MeNB that transmission delay of the offloaded bearer data packets is too long. The control plane signaling may be a new message called as message 1, which contains a value Long of IE-Transmission (enumerated values "Short, Medium, Long, ...") or a value of delay time (which may be an average). The remaining reported details are the same as described in the first embodiment and will not be repeated any more.

In step 803, after the MeNB receives the control plane signaling, if the information indicates that the delay is long, then the MeNB may adjust the protocol layer configuration of the offloaded bearer, for example, prolong the discarding timer of the transmitting end (continuing with the unit at which the reported information is aimed in step 702, here the MeNB determines the adjustment to the protocol layer configuration is also aimed at the DRB/UE, like the first embodiment. For the user plane architecture:
AltlA/ 2A/ 3A: When the MeNB indicates the SeNB to transmit downlink through the Sn interface, it may allow status information fed back to the lower layer by the PDCP to be waited for a long time.
Alt 2B/2C/2D/3B/3C/3D: Taking downlink data as an example, for the offloaded bearer with higher demand for reliability, the MeNB can prolong the waiting time of the discarding timer , i.e., allow a longer time to receive feedback.

The MeNB can coordinate and act in concert with the case where the transmission delay of the data packets at the SeNB side is long through the adjustment of the protocol layer configuration, thereby providing more reliable and efficient transmission for the UE.

The SeNB reports the information to the MeNB according to the actual situation where it transmits the data packets, and the MeNB's processing operation after receiving the information is not limited to the situation described in the embodiment and is even not limited to the processing in step 3 corresponding to reporting information in step 802 described in the embodiment, that is, the processing described in step 803 corresponds to any reported information described in step 802.

An embodiment provides an eNB which may implement the method in accordance with the first embodiment, the eNB at least comprises the following units.

A first unit is configured to detect offloaded bearer status information of the eNB in the process in which the eNB as a secondary eNB undertakes an offloaded bearer data transmission service of a user equipment (UE) for a master eNB.

The offloaded bearer status information at least includes one or more of the following:
user plane protocol stack buffer information, data packet transmission failure rate information of the offloaded bearer and data packet transmission delay information of the offloaded bearer.

A second unit is configured to transmit the offloaded bearer status information of the eNB to the master eNB.

The second unit is further configured to transmit the offloaded bearer status information of the eNB to the master eNB through a control plane signaling or a control information element of a user plane.

The second unit is configured to transmit the offloaded bearer status information of the eNB to the master eNB according to a period pre-configured by the master eNB; or transmit the offloaded bearer status information of the eNB to the master eNB after receiving a request message sent by the master eNB; or transmit the offloaded bearer status information of the eNB to the master eNB when the offloaded bearer status information of the eNB satisfies any of triggering conditions pre-configured by the master eNB, wherein the triggering conditions at least include three conditions (but the technical scheme of the application is not limited to the three triggering conditions):
a user plane protocol stack buffer of the eNB is overloaded;
a data packet transmission failure rate of the offloaded bearer of the eNB is too high; and
data packet transmission delay of the offloaded bearer of the eNB is too long.

The eNB described above may be used as the master eNB. In addition, the eNB further comprises a third unit configured to receive the offloaded bearer status information sent by the secondary eNB and adjust the offloading strategy for the secondary eNB according to the received offloaded bearer status information.

The third unit is configured to adjust the offloading strategy for the secondary eNB according to the offloaded bearer status information of the secondary eNB, including one or more of the following:
slowing down the transmission of data packets for the secondary eNB;
deleting the offloading transmission undertaken by the secondary eNB; and
adjusting protocol layer configuration of the offloaded bearer and prolonging a discarding timer of a transmitting end.

Other details of the eNB described above may refer to the corresponding content of the first embodiment and will not be repeated here any more.

The ordinary person skilled in the art may understand that all or partial steps in the embodiments described above can be can be completed by a program instructing related hardware, , and the program can be stored in a computer readable storage medium, such as a read-only memory, magnetic disk and optical disk. Optionally, all or partial steps in the embodiments described above can be carried out using one or more integrated circuits. Accordingly, various modules/units in the embodiments can be implemented in the form of hardware or software functional module. The present invention is not limited to the combination of any specific form of hardware and software.

The foregoing are preferred embodiments of the present invention only and are not intended to limit the protection scope of the embodiments of the present invention. Any modification, equivalent substitution and improvement made within the spirit and principle of the embodiments of the present invention should be included in the protection scope of the embodiments of the present invention.

### Industrial Applicability

The technical scheme of the embodiments of the present invention is intended to provide a scheme in which an MeNB and an SeNB can coordinates timely and primely to provide high rate joining data transmission services for a UE in a heterogeneous network. The technical scheme of the application is applicable to various user plane architectures and Xn interfaces and able to provide excellent joining data transmission services for the UE at high speed and reliably.

## Claims

1. A method for coordinated multi-stream transmission of data comprising:
in a process of undertaking an offloading bearer data transmission service of a user equipment for a master eNode B (eNB), a secondary eNB selected as an offloading node transmitting offloaded bearer status information of the secondary eNB to the master eNB; and
the master eNB adjusting an offloading strategy for the secondary eNB according to the offloaded bearer status information of the secondary eNB.

2. The method according to claim 1, wherein the offloaded bearer status information at least includes one or more of the following:
user plane protocol stack buffer information, data packet transmission failure rate information of offloaded bearer and data packet transmission delay information of the offloaded bearer.

3. The method according to claim 1, wherein the secondary eNB transmitting offloaded bearer status information of the secondary eNB to the master eNB comprises:
the secondary eNB transmitting the offloaded bearer status information of the secondary eNB to the master eNB through a control plane signaling or a control information element of a user plane.

4. The method according to claim 1 or 2 or 3, wherein the secondary eNB transmitting offloaded bearer status information of the secondary eNB to the master eNB comprises:
the secondary eNB transmitting the offloaded bearer status information of the secondary eNB to the master eNB according to a period configured by the master eNB; or
the secondary eNB transmitting the offloaded bearer status information of the secondary eNB to the master eNB after receiving a request message sent by the master eNB; or
the secondary eNB transmitting the offloaded bearer status information of the secondary eNB to the master eNB when the offloaded bearer status information of the secondary eNB satisfies any of triggering conditions configured by the master eNB, wherein the triggering conditions at least include:
a user plane protocol stack buffer of the secondary eNB is overloaded;
a data packet transmission failure rate of offloaded bearer of the secondary eNB is too high; and
a data packet transmission delay of the offloaded bearer of the secondary eNB is too long.

5. The method according to claim 4, wherein the master eNB adjusting an offloading strategy for the secondary eNB according to the offloaded bearer status information of the secondary eNB comprises one or more of the following operations:
adjusting an offloaded data volume/rate for the secondary eNB;
modifying protocol layer configuration of the offloaded bearer for the secondary eNB; and
canceling offloading transmission for the secondary eNB.

6. An eNode B (eNB) comprising:
a first unit configured to detect offloaded bearer status information of the eNB in a process in which the eNB as a secondary eNB undertakes an offloaded bearer data transmission service of a user equipment for a master eNB; and
a second unit configured to transmit offloaded bearer status information of the eNB to the master eNB.

7. The eNB according to claim 6, wherein the offloaded bearer status information at least includes one or more of the following:
user plane protocol stack buffer information, data packet transmission failure rate information of offloaded bearer and data packet transmission delay information of the offloaded bearer.

8. The eNB according to claim 6, wherein
the second unit is further configured to transmit the offloaded bearer status information of the eNB to the master eNB through a control plane signaling or a control information element of a user plane.

9. The eNB according to claim 6 or 7 or 8, wherein
the second unit is further configured to transmit the offloaded bearer status information of the eNB to the master eNB according to a period configured by the master eNB; or transmit the offloaded bearer status information of the eNB to the master eNB after the eNB receives a request message sent by the master eNB; or transmit the offloaded bearer status information of the eNB to the master eNB when the offloaded bearer status information of the eNB satisfies any of triggering conditions configured by the master eNB, wherein the triggering conditions at least include:
a user plane protocol stack buffer of the eNB is overloaded;
a data packet transmission failure rate of offloaded bearer of the eNB is too high; and
a data packet transmission delay of the offloaded bearer of the eNB is too long.

10. The eNB according to claim 9, further comprising a third unit configured to, when the eNB is the master eNB, receive offloaded bearer status information sent by other secondary eNB and adjust an offloading strategy for the secondary eNB according to the received offloaded bearer status information of the secondary eNB.

11. The eNB according to claim 10, wherein the third unit is configured to adjust the offloading strategy for the secondary eNB according to the offloaded bearer status information of the secondary eNB, including one or more of the following operations:
adjust an offloaded data volume/rate for the secondary eNB;
modifying protocol layer configuration of the offloaded bearer for the secondary eNB; and
canceling offloading transmission for the secondary eNB.
